# EUROPEAN PATENT SPECIFICATION

(11) **EP 2 925 270 B1**
(45) Date of publication and mention of the grant of the patent: **16.01.2019**
(21) Application number: 13802739.6
(22) Date of filing: 29.11.2013
(51) Int. Cl.: A61G 7/10

(54) **CLIP FOR CONNECTING A SLING WITH A LIFTING ARM OF A HOIST**
KLAMMER ZUM VERBINDEN EINER SCHLINGE MIT EINEM HEBEARM EINES HEBEZEUGS
ATTACHE POUR RACCORDER UNE ÉLINGUE À UN BRAS DE LEVAGE D'UN TREUIL

(30) Priority: 30.11.2012 NL 2009912
(43) Date of publication of application: 07.10.2015
(73) Proprietor: JOSH IP I B.V., 9699 PP Vriescheloo (NL)
(72) Inventor: HUIZINGA, Jozef, NL-9699 PP Vriescheloo (NL)
(74) Representative: V.O.
(86) International application number: PCT/NL2013/050864
(87) International publication number: WO 2014/084740

(56) References cited:
- EP-A1- 1 440 676
- EP-A2- 2 450 021
- WO-A2-2007/035098
- US-A- 3 680 914
- US-A1- 2004 159 208

## Description

### FIELD

The invention relates to a clip for connecting a sling to a lifting arm of a hoist. The invention further relates to an assembly of a hoist, a sling and such a clip.

### BACKGROUND

A clip for connecting a sling with the lifting arm of a hoist is known per se. Examples thereof are described in EP-1 440 676, WO2007/035098, WO97/01319, GB-2 293 857. In the light of the present invention, EP-1 440 676 seems to be the closest prior art. From this publication, the features of the pre-characterizing portion of claim 1 are known. More particularly, it concerns a clip for connecting a sling to a lifting arm of a hoist, wherein the lifting arm is provided with at least one substantially mushroom-shaped fastening element which comprises a fastening pin and a fastening head integrally connected therewith. The fastening head has a greater diameter than the fastening pin. The known clip is provided with a case having a body part in which a keyhole-shaped recess is provided. The keyhole-shaped recess comprises a substantially circular part and a slotted part. The wide, substantially circular part has a diameter that is greater than the diameter of the fastening head. The narrow part has a width that is smaller than the diameter of the fastening head but greater than the diameter of the fastening pin. Further, the known clip is provided with a locking member, more particularly two locking members, pivotably connected with the body part. Each locking member can assume a closed position and a release position. A spring is provided for biasing the locking member in the closed position. In the clip known from EP-1 440 676 there are two locking members movable parallel to the plane of the body part, which are referred to there as locking devices. The locking devices each comprise near a first end a closing member and near a second end an operation member. In the publication it is stated that the body part is provided with a continuous slot having a first portion through which the pin (stud) and its head will pass and a second portion through which the pin will, but the head of the pin will not pass, and a connection portion between the first and second portion. The closing members of the two locking devices close off the connection portion of the slot when they are in a first position. Upon operation of the locking devices, the closing members of the locking device move out of the connection portion of the slot. The known clip has a simple operation as an advantage. Moreover, the known clip is relatively simple in construction. However, a disadvantage of the known clip is that upon operation of the locking devices the hand partly covers the slot, so that at the time of coupling up, there is no view or a poor view of the fastening element and therefore a wrong placement of the clip may go unnoticed.

### SUMMARY OF THE INVENTION

In practice, it has been found that in the use of the known clip in some cases accidents still occur. These accidents in most cases find their origin in the incorrect fitting of the clip on the fastening element of the hoist. A caregiver thinks that the pin has passed the two locking devices, but in one or two cases this proves not to be the case. Mostly, the fastening element thereupon still slides into its proper place, but sometimes it does not. Then the fastening element moves in the direction of the circular part of the recess and the clip can slip off the fastening element with dramatic consequences not hard to guess.

The invention contemplates a clip that features the advantages of the known clip, such as a simple operation and a simple construction, whereby the chance of the above-described calamity occurring is limited still further.

To that end, the invention provides a clip according to claim 1.

The signaling means afford a caregiver and the care recipient or patient a checking possibility of rapidly establishing whether the fastening element is received in the keyhole-shaped recess in the right position, viz., in the narrow part thereof. Thus, the chance that upward movement of the lifting arm and hence lifting of the patient is initiated while the clip is fitted on the fastening element of the lifting arm in the wrong manner is limited to a minimum. In the protocol description of the routine that a caregiver is to perform in lifting a patient, the check of the signals that are provided by the signaling means can be included. A further safety of the activities is thereby promoted, which further minimizes the chance of accidents. Claim 1 additionally requires that the slidability or the pivotability of the signaling member is independent of the slidability or pivotability of the locking member. In this way, if the locking member has moved into the locking position, but for some reason the fastening element is not properly positioned in the narrow part of the keyhole-shaped recess, it still becomes clear to the user that there is a dangerous situation at hand, which he is being warned about in that the signaling member is not in the right position. WO2007/035098 concerns a clip provided with a body and with one or more locking members which can assume different positions relative to the body. While this publication is silent on signaling means, the position of the locking means could serve as a signal of the fact that the locking means is not in the right position. Even so, circumstances may occur where, while the locking means are in the locking position, the fastening element is nonetheless improperly positioned in the keyhole-shaped recess. By providing a signaling member that is movably arranged independently of the locking means, a solution to this kind of situations is provided.

Further elaborations of the invention are described in the subclaims and will be further clarified hereinafter, on the basis of a number of exemplary embodiments, with reference to the drawings.

### BRIEF DESCRIPTION OF THE FIGURES

Fig. 1 shows a perspective view of an example of a hoist;
Fig. 2 shows the end of a lifting arm of the hoist with fastening element;
Fig. 3 shows an exploded view of an example of a clip;
Fig. 4 shows a cross-sectional view of the clip, with a fastening element received in the keyhole-shaped recess and with the locking member in the closed position;
Fig. 5 shows the clip of Fig. 4 in the same condition in perspective, with the signaling member represented in broken lines;
Fig. 6 shows a cross-sectional view of the clip, with no fastening element received in the keyhole-shaped recess and the locking member pressed in the release position; and
Fig. 7 shows the clip of Fig. 6 in the same condition in perspective, with the signaling member represented in broken lines.

### DETAILED DESCRIPTION

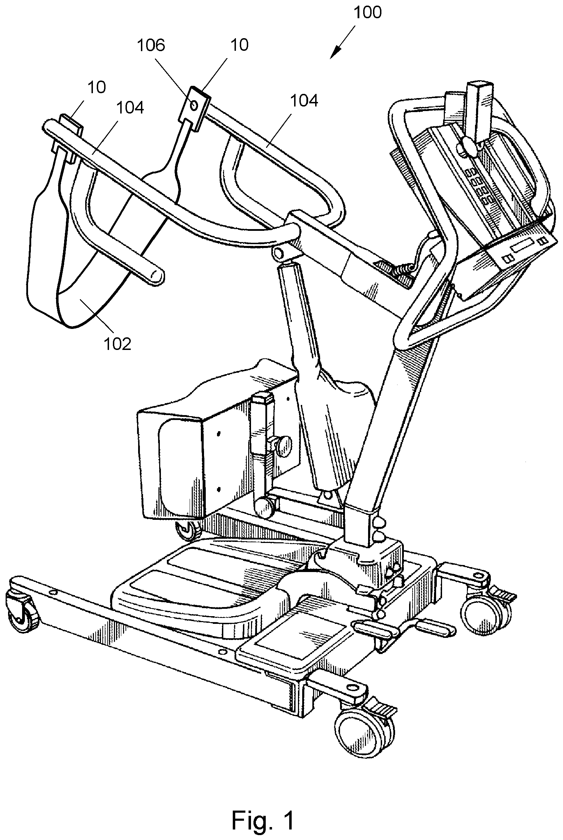

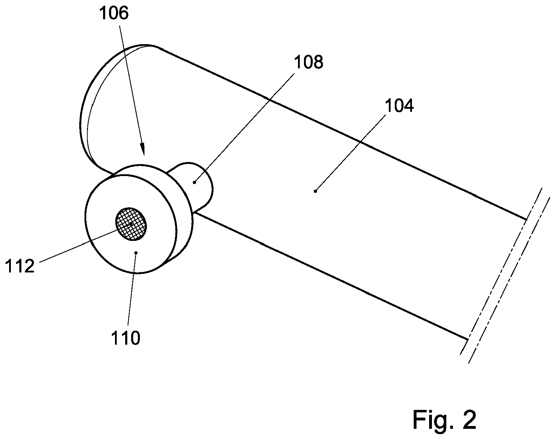

Figure 1 shows an example of a hoist 100 provided with a lifting arm 104. As is clearly visible in Figure 2, the lifting arm 104 is provided with at least one substantially mushroom-shaped fastening element 106 which comprises a fastening pin 108 and a fastening head 110 integrally connected therewith. The fastening head 110 has a greater diameter than the fastening pin 108.

The invention relates in its most general terms to a clip 10 for connecting a sling 102 to a lifting arm 104 of a hoist 100, more particularly to the fastening element 106 of such a lifting arm. The clip 10 is provided with a case having a body part 12 in which a substantially keyhole-shaped recess 14, 16 is provided. The substantially keyhole-shaped recess comprises a wide part 14 which can be substantially circular, and a narrow part 16 which can be substantially slotted. The wide part 14 has a dimension that is such that the fastening head 110 is movable therethrough. The narrow part 16 has a dimension that is such that the fastening head 110 is not movable therethrough and the fastening pin 108 is. In the example shown in the figures, to that end, the circular part 14 has a diameter that is greater than the diameter of the fastening head 110 and the narrow part 16 has a width that is smaller than the diameter of the fastening head 110 but greater than the diameter of the fastening pin 108. A substantially keyhole-shaped recess is to be understood to mean also a recess that has a shape deviating from the perfect keyhole shape. Of relevance is that the recess has a wide part 14 through which the fastening head 110 can move and a narrow part 16 through which the fastening head 110 cannot move. That can be realized, for instance, with a kind of triangular recess, where the part of the recess near a side of the triangle forms the wide part and where a part that is near an angle of the triangle constitutes the narrow part. Further, the clip 10 is provided with a locking member 18 which is pivotably or slidably connected with the body part 12. The locking member 18 can assume a closed position and a release position. The clip 10 comprises a spring 20 for biasing the locking member 18 to the closed position. The locking member 18, in an embodiment, may also be an integral part of the body part 12. The connection between the body part 12 and the locking member is then a joint integrated in the material. Such joint, possibly together with the integrated locking member 18, may also have resilient properties. In that case, the spring 20 is formed by, and is therefore integrated in, the material that constitutes body part 12 and locking member 18. The clip 10 is characterized by signaling means 24; 26-32 which are arranged for providing a signal from which it appears that the fastening element 106 is positioned in the right manner in the narrow part 16 of the substantially keyhole-shaped recess 14, 16.

In a first embodiment, the signal may be a visual signal, such as, for instance, a signaling color which differs from the color of the case. Possibly, the clip may be provided with a supply, for example, a battery, and the visual signal may be a green and/or red LED which lights up if the clip 10 is properly placed on the fastening element 106.

In an embodiment, the signal may be an electronic signal which is led to an electronic processing unit. The control may be arranged, for instance, to block the lifting action of the hoist when the electronic signal indicates that the clip 10 is not properly placed on the fastening element 106.

In yet another embodiment, the signal may be an auditive signal, for instance, an alarm bell or buzzer that sounds when the clip 10 is not properly placed on the fastening element 106.

Possibly, the signal may also be a tactile signal, for instance, a vibration in the clip 10 that indicates that the clip 10 is not properly placed on the fastening element 106.

The signaling means 24; 26-32 afford the caregiver a visual checking possibility to determine whether the clip 10 is connected to the fastening element 106 in the right manner. In case of visual signaling means, for instance a green marking can denote correct assembly and a red marking incorrect assembly.

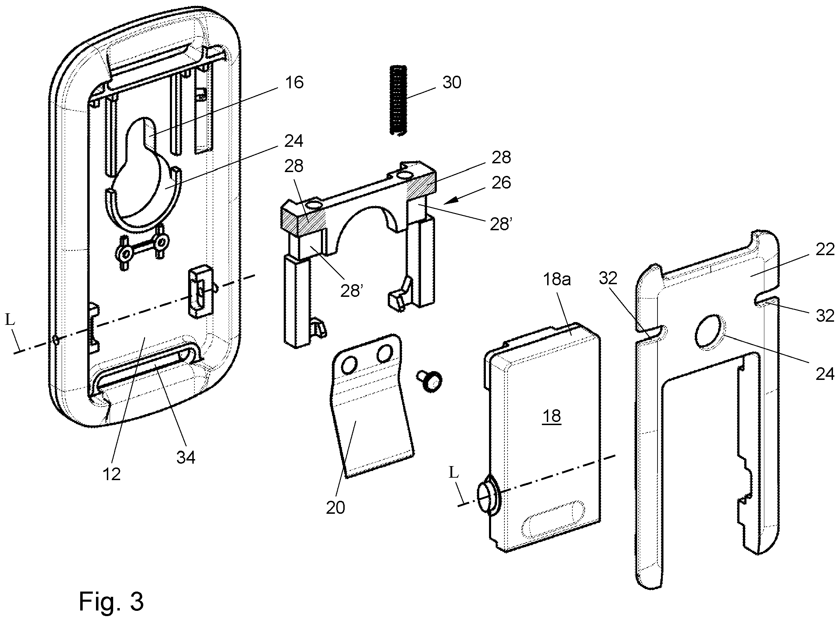

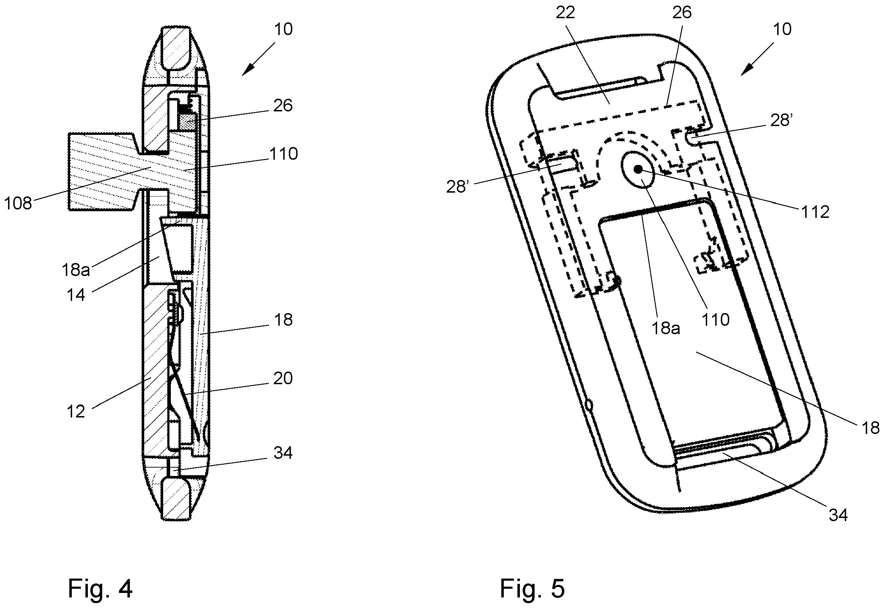

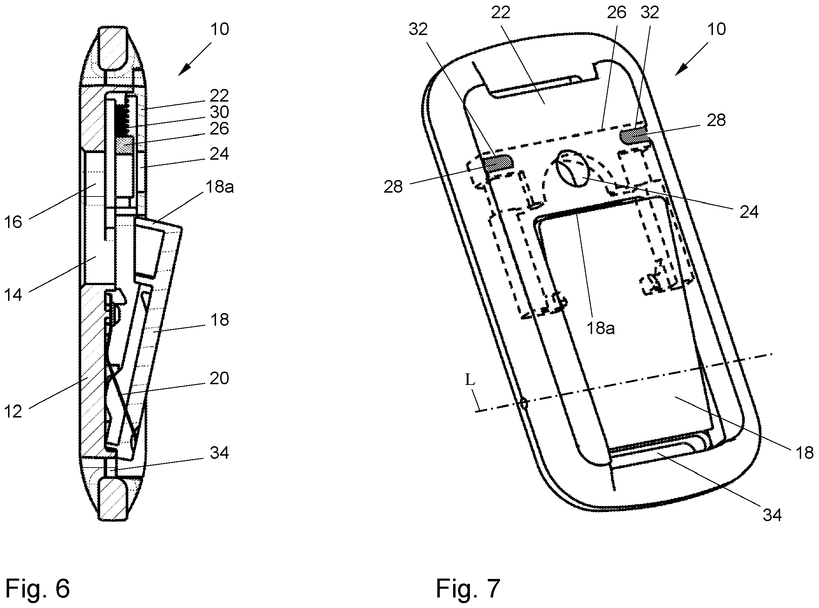

In a first embodiment of the clip 10, of which an example is shown in Figures 3-7, the signaling means 22, 26-32 comprise a covering cap 22 which is connected with the body part 12 and which covers the narrow part 16 of the substantially keyhole-shaped recess 14, 16 at least partly on a side of the body part 12. A signaling member 26 is slidably or pivotably connected with the body part 12 and at least partly covered by the covering cap 22. The signaling member 26 is provided with at least two differently colored areas 28, 28'. The signaling member is slidable or pivotable from a first position to a second position and vice versa. Spring means 30 urge the signaling member 26 into a first position. The covering cap 22 and/or the body part 12 is provided with at least one signaling recess 32 which is associated with the differently colored areas 28, 28'. The signaling member 26 is in the first position when no fastening element 106 is received in the narrow part 16 of the substantially keyhole-shaped recess 14, 16 or is incorrectly positioned. The signaling member 26 is in the second position when the fastening element 106 is received in the narrow part 16 of the substantially keyhole-shaped recess 14, 16 in the right manner. In the first position of the signaling member 26, a first 28 of the two differently colored areas 28, 28' is visible via the at least one signaling recess 32. In the second position of the signaling member 26, a second 28' of the two differently colored areas 28, 28' is visible via the at least one signaling recess 32. The one colored area 28 may, for instance, be red and the second colored area 28' may, for instance, be green. The caregiver who places the clip 10 on a fastening element 106 can simply check on the basis of the visual signaling means whether the clip 10 is correctly positioned. If he sees a green colored area 28', he knows that the clip 10 is correctly placed. Also, it is clearly visible and audible whether the locking member 18 is clicked into the closed position. This visual and auditive signalings enhance the safety of the use of the hoist 100. It will be clear that the signaling recess 32 may be covered with a transparent window which can optionally even have lens action. The colors mentioned are only examples; for instance, one color area 28 may have the color of the body part 12 and/or the covering cap 22 and the second colored area 28' may have a color different from the body part 12 and/or covering cap 22. Preferably, the signaling member 26 is a part of the clip 10 that does not form part of the locking member 18. In this way, if the locking member 18 has moved into the locking position, but for some reason the fastening element 106 is not properly positioned in the narrow part 16 of the keyhole-shaped recess 14, 16, it still becomes clear to the user that there is a dangerous situation at hand, which he is being warned about in that the signaling member is not in the right position. WO2007/035098 concerns a clip provided with a body and with one or more locking members which can assume different positions relative to the body. While this publication is silent on signaling means, the position of the locking means could serve as a signal of the fact that the locking means is not in the right position. Even so, circumstances may occur where, while the locking means are in the locking position, the fastening element is nonetheless improperly positioned in the keyhole-shaped recess. By providing a signaling member 26 that is movably arranged independently of the locking means, a solution to this kind of situations is provided.

In an embodiment of which an example is shown in the figures, the signaling recesses 32 are provided near a lateral edge of the clip 10. This provides the advantage that the visual check can take place from a position that is in the plane in which the body part 12 of the clip 10 extends. The signaling recesses 32 preferably extend also to a front surface and the rear surface of the clip 10, so that from any position relative to the clip, the colored areas 28, 28' are visible, to both caregiver and care recipient.

In a second embodiment, of which an example is shown in Figures 3-7, the signaling means 22, 24 comprise a covering cap 22 which is connected with the body part 12 and which covers the narrow part 16 of the substantially keyhole-shaped recess 14, 16 at least partly on a side of the body part 12. In the covering cap 22 a recess 24 is positioned such that through it an upper side of the fastening head 110 is visible and is centered when the fastening element 106 is received in the right manner in the narrow part 16 of the substantially keyhole-shaped recess 14, 16. The fastening element 106 may, for instance, be provided with a colored dot 112 on the fastening head 110. When the fastening element 106 is properly positioned in the substantially keyhole-shaped recess 14, 16, the fastening head 110 is centered behind the recess 24 in the covering cap 22. Certainly when the recess 24 is circular and the fastening head 110 is additionally provided with a colored round dot 112, it can be simply observed whether the dot 112, and hence the fastening head 110, is properly centered with respect to the recess 24. If such is the case, this is evidence of a correct positioning of the fastening element 106 in the narrow part 16 of the substantially keyhole-shaped recess 14, 16 and of a correct placement of the clip 10 on the fastening element.

Although the two embodiments described above can be used independently of each other, it is also possible, according to a further elaboration, that the first embodiment and the second embodiment are combined with each other. In that case, there is a covering cap 22 having both the signaling recess 32 and the recess 24 through which, upon correct placement of the clip 10, the fastening element 110 is visible and is centered. Such an embodiment is shown in the example of Figures 3-7.

In an embodiment, of which an example is shown in the figures, the clip 10 is provided with a covering cap 22 which covers the wide part 14 of the substantially keyhole-shaped opening 14, 16 at least partly. What is thus prevented is that, upon placement of such a clip 10 on a fastening element 106, the clip 10 is slid over the fastening element too far, which could lead to an incorrect locking of the clip 10 with respect to the fastening element. The covering cap 22 limiting the movement of the clip 10 over the fastening element 106 leads the caregiver to feel during placement that the clip 10 has been fitted sufficiently far over the fastening element 106 in the direction of the fastening pin 108. This is because during placement the fastening head 110 of the fastening element 106 butts against the covering plate 22. This affords the caregiver tactile feedback about the clip 10 having been slipped onto fastening element 106 sufficiently far but not too far. Moreover, this prevents the clip 10 being placed askew on the fastening element 106, which is possible in the known clip and is a cause of accidents. Then, the clip 10 can be moved parallel to the body 12 to move the fastening element 106 to the narrow part 16 of the substantially keyhole-shaped recess 14, 16. Such a clip 10 with covering cap 22 might also be used beneficially without the signaling means mentioned.

In an embodiment, of which two examples are shown in the figures, the locking member 18 is pivotable about a hinge axis L which extends parallel to the body part 12.

Such a design enables a simple operation of the locking member 18 by exerting a pressure force on a part of the locking member 18. Moreover, with a locking member 18 of such design, operation of the locking member is possible without the substantially keyhole-shaped recess 14, 16 being covered by the hand. Consequently, the caregiver can see at the time of placement that the fastening element 106 is properly received in the recess 14, 16. The risk of wrong placement of the clip 10 is thereby minimized.

In an embodiment, the locking member 18 comprises a substantially plate-shaped body 18 with an edge 18a, which extends substantially parallel to the hinge axis L. The edge 18a, in the closed position of the locking member 18, bounds a circumferential edge of the fastening head 110, such that the fastening element 106 is not movable from the narrow part 16 to the wide part 14 of the substantially keyhole-shaped recess 14, 16. Upon pivoting of the locking member 18 into the release position, the relevant edge 18a has moved away from the body part 12 with respect to the closed position of the locking member 18, such that the relevant edge 18a does not bound the circumferential edge of the fastening head 110 and the fastening head 110 is movable between the locking member 18 and the body part 12 in the direction of the wide part 14 of the substantially keyhole-shaped recess 14, 16. Engaging the circumferential edge of the fastening head 110 provides a secure locking of the fastening element 106 in the narrow part 16 of the substantially keyhole-shaped recess. As the circumferential edge of the fastening head 110 has to be passed to bring the locking member 18 from the release position into the closed position, the fastening element 106 needs to be slid all the way to the end of the narrow part 16 of the substantially keyhole-shaped recess 14, 16. Not until then does the caregiver hear the click of the locking member 18 closing and do the visual signaling means indicate the safe condition.

In an embodiment, the positioning of the hinge axis L and the spring 20 which urges the locking member 18 into the closed position can be chosen such that for bringing the locking member 18 from the closed position to the release position a pressure force is to be exerted on the locking member 18 that is directed substantially perpendicularly to a main surface of the body part 12. The figures show an example of such an embodiment.

In an embodiment, the above-mentioned edge 18a of the locking member 18 can be provided with a substantially semicircular recess whose diameter substantially corresponds to the outer diameter of the fastening head 110, such that the circumferential edge of the fastening head 110 is partly surrounded by the edge part of the edge 18a that defines the circular recess. This provides for a still larger abutment surface between the locking member and the circumferential edge of the fastening head 110, which can improve the firmness of the locking still further.

To provide the necessary firmness to the locking member 18 and to effect a secure abutment between the circumferential edge of the fastening head 110 and the edge 18a of the locking member 18, in an embodiment the edge 18a can have a thickness that is enlarged with respect to the thickness of the plate-shaped body 18 of the locking member 18. The thickness of the edge 18a then preferably corresponds to the thickness of the fastening head 110.

The clip 10 may be provided with at least one narrow recess 34 in the body part 12 of the case for attachment of a sling 102 to the clip 10. When the sling 102 is to be replaced, the clip 10 already put into use can be connected with the new sling 102. In Figure 1 it is visible that the sling 102 is connected with the clip 10 via the recess 34.

The invention further concerns an assembly comprising a hoist 100, at least one clip 10 and a sling 102 which is provided with at least one free end with which an associated clip 10 is connected. The hoist 100 is generally provided with a lifting arm 104, the lifting arm 104 being provided with at least one mushroom-shaped fastening element 106 which comprises a fastening pin 108 and a fastening head 110 integrally connected therewith. The fastening head 110 has a greater diameter than the fastening pin 108.

While the invention has been represented and described in detail with reference to the drawing, this drawing and this description should be regarded only as an example. The invention is not limited to the embodiment described. Features that are described in preceding claims can be combined with each other. The reference numerals in the claims are not to be construed as limitations of the claims but serve merely for clarification. Different variants are possible. Thus, for instance, the clip may also be used for other types of slings or carrying harnesses which are provided with more than two suspension points or with only one suspension point.

## Claims

1. A clip (10) for connecting a sling (102) to a lifting arm (104) of a hoist (100), wherein the lifting arm (104) is provided with at least one substantially mushroom-shaped fastening element (106) which comprises a fastening pin (108) and a fastening head (110) integrally connected therewith, wherein the fastening head (110) has a greater diameter than the fastening pin (108), wherein the clip (10) is provided with:
• a case with a body part (12) in which a substantially keyhole-shaped recess (14, 16) is provided, wherein the substantially keyhole-shaped recess comprises a wide part (14) and a narrow part (16), wherein the wide part (14) has a dimension that is such that the fastening head (110) is movable therethrough, and wherein the narrow part (16) has a dimension that is such that the fastening head (110) is not movable therethrough and the fastening pin (108) is;
• a locking member (18) which is pivotably or slidably connected with the body part (12), wherein the locking member (18) can assume a closed position and a release position;
• a spring (20) for biasing the locking member (18) into the closed position;
**characterized by**:
• signaling means (22, 24; 22, 26-32) which are arranged for providing a signal from which it appears that the fastening element (106) is positioned in the narrow part (16) of the substantially keyhole-shaped recess (14, 16) in the right manner, wherein the signaling means (24; 26-32) comprise:
∼ a covering cap (22) which is connected with the body part (12) and which covers the narrow part (16) of the substantially keyhole-shaped recess (14, 16) at least partly on a side of the body part (12);
∼ a signaling member (26) which is slidably or pivotably connected with the body part (12), which is at least partly covered by the covering cap (2), which is provided with at least two differently colored areas (28, 28'), and which is slidable or pivotable from a first position to a second position and vice versa;
∼ spring means (30) which urge the signaling member (26) into a first position;
∼ at least one signaling recess (32) in the covering cap (22) or the body part (12) which is associated with the differently colored areas (28, 28');
wherein the signaling member (26) is in the first position when no fastening element (106) is received in the narrow part (16) of the substantially keyhole-shaped recess (14, 16) and wherein the signaling member (26) is in the second position when the fastening element (106) is received in the narrow part (16) of the substantially keyhole-shaped recess (14, 16) in the right manner, wherein in the first position of the signaling member (26) a first (28) of the two differently colored areas (28, 28') is visible via the at least one signaling recess (32), wherein in the second position of the signaling member (26) a second (28') of the two differently colored areas (28, 28') is visible via the at least one signaling recess (32), wherein slidability or pivotability of the signaling member (26) is independent of the slidability or pivotability of the locking member (18).

2. The clip according to claim 1, wherein the signal is a visual signal.

3. The clip according to claim 1 or 2, wherein the signal is an electronic signal which is led to an electronic processing unit.

4. The clip according to any one of the preceding claims, wherein the signal is an auditive signal.

5. The clip according to any one of claims 1-4, wherein the signaling means (22, 24, 26-32) comprise:
• a recess (24) in the covering cap (22) which is so positioned that therethrough a top side of the fastening head (110) is visible and is centered when the fastening element (106) is received in the narrow part (16) of the substantially keyhole-shaped recess (14, 16) in the right manner.

6. The clip according to any one of the preceding claims, wherein the locking member (18) is pivotable about a hinge axis (L) which extends parallel to the body part (12).

7. The clip according to claim 6, wherein the locking member (18) comprises a substantially plate-shaped body (18) with an edge (18a) which extends substantially parallel to the hinge axis L, wherein the edge (18a), in the closed position of the locking member (18), bounds a circumferential edge of the fastening head (110), such that the fastening element (106) is not movable from the narrow part (16) to the wide part (14) of the substantially keyhole-shaped recess (14, 16), wherein the relevant edge (18a), upon pivoting of the locking member (18) into the release position, has moved away from the body part (12) with respect to the closed position of the locking member (18), such that the relevant edge (18a) does not bound the circumferential edge of the fastening head (110) and the fastening head (110) is movable between the locking member (18) and the body part (12) in the direction of the wide part (14) of the substantially keyhole-shaped recess (14, 16).

8. The clip according to claim 7, wherein for bringing the locking member (18) from the closed position to the release position a pressure force is to be exerted on the locking member (18) which is directed substantially perpendicularly to a main surface of the body part (12).

9. The clip according to claim 7 or 8, wherein the said edge (18a) of the locking member (18) is provided with a substantially semicircular recess whose diameter substantially corresponds to the outer diameter of the fastening head (110), such that the circumferential edge of the fastening head (110) is partly surrounded by the edge part of the edge (18a) that defines the circular recess.

10. The clip according to any one of claims 7-9, wherein the edge (18a) has a thickness that is enlarged with respect to the thickness of the plate-shaped body (18) of the locking member (18), wherein the thickness of the edge (18a) substantially corresponds to the thickness of the fastening head (110).

11. The clip according to any one of the preceding claims, provided with:
• at least one slotted recess (34) in the body part (12) of the case for attachment of a sling (102) to the clip (10).

12. The clip according to any one of claims 1-11, provided with a covering cap (22) which covers the wide part (14) of the substantially keyhole-shaped opening (14, 16) at least partly.

13. An assembly comprising:
• a hoist (100) provided with a lifting arm (104), wherein the lifting arm (104) is provided with at least two mushroom-shaped fastening elements (106) comprising a fastening pin (108) and a fastening head (110) integrally connected therewith, wherein the fastening head (110) has a greater diameter than the fastening pin (108);
• at least one clip (10) according to any one of the preceding claims; and
• a sling (102) which is provided with at least one free end, wherein each free end is connected with an associated clip (10).

## Patentansprüche

1. Klammer (10) zum Verbinden einer Schlinge (102) mit einem Hebearm (104) eines Hebezeugs (100), wobei der Hebearm (104) versehen ist mit mindestens einem im Wesentlichen pilzförmigen Befestigungselement (106), das einen Befestigungsstift (108) und einen integral damit verbundenen Befestigungskopf (110) umfasst, wobei der Befestigungskopf (110) einen größeren Durchmesser hat als der Befestigungsstift (108), wobei die Klammer (10) versehen ist mit:
• einer Hülle mit einem Körperteil (12), in dem eine im Wesentlichen schüssellochförmige Vertiefung (14, 16) bereitgestellt ist, wobei die im Wesentlichen schlüssellochförmige Vertiefung einen breiten Teil (14) und einen schmalen Teil (16) umfasst, wobei der breite Teil (14) eine derartige Abmessung hat, dass der Befestigungskopf (110) durch diesen beweglich ist, und wobei der schmale Teil (16) eine derartige Abmessung hat, dass der Befestigungskopf (110) durch diesen nicht beweglich ist und der Befestigungsstift (108) ist:
• ein Verriegelungsglied (18), das drehbar oder gleitbar mit dem Körperteil (12) verbunden ist, wobei das Verriegelungsglied (18) eine geschlossene Position und eine Freigabeposition annehmen kann;
• eine Feder (20) zum Neigen des Verriegelungsglieds (18) in die geschlossene Position;
**gekennzeichnet durch**:
Signalisierungsmittel (22, 24; 22, 26-32), die angeordnet sind zum Bereitstellen eines Signals, von dem es scheint, dass das Befestigungselement (106) in dem schmalen Teil (16) der im Wesentlichen schlüssellochförmigen Vertiefung (14, 16) in der richtigen Weise positioniert ist, wobei die Signalisierungsmittel (24; 26-32) Folgendes umfassen:
∼ eine Deckkappe (22), die mit dem Körperteil (12) verbunden ist und die den schmalen Teil (16) der im Wesentlichen schlüssellochförmigen Vertiefung (14, 16) mindestens teilweise an einer Seite des Körperteils (12) bedeckt;
∼ ein Signalisierungsglied (26), das gleitbar oder drehbar mit dem Körperteil (12) verbunden ist, das mindestens teilweise von der Deckkappe (2) bedeckt wird, die mit mindestens zwei verschiedenfarbigen Bereichen (28, 28') versehen ist und die gleitbar oder drehbar ist von einer ersten Position zu einer zweiten Position und umgekehrt;
∼ Federmitteln (30), die das Signalisierungsglied (26) in eine erste Position drängen;
∼ mindestens eine Signalisierungsvertiefung (32) in der Deckkappe (22) oder dem Körperteil (12), die zu den verschiedenfarbigen Bereichen (28, 28') gehört;
wobei das Signalisierungsglied (26) in der ersten Position ist, wenn kein Befestigungselement (106) in dem schmalen Teil (16) der im Wesentlichen schlüsselförmigen Vertiefung (14, 16) aufgenommen ist und wobei das Signalisierungsglied (26) in der zweiten Position ist, wenn das Befestigungselement (106) in dem schmalen Teil (16) der im Wesentlichen schlüsselförmigen Vertiefung (14, 16) in der richtigen Weise aufgenommen ist, wobei in der ersten Position des Signalisierungsglieds (26) ein erster (28) der zwei verschiedenfarbigen Bereiche (28, 28') über die mindestens eine Signalisierungsvertiefung (32) sichtbar ist, wobei in der zweiten Position des Signalisierungsglieds (26) ein zweiter (28') der zwei verschiedenfarbigen Bereiche (28, 28') über die mindestens eine Signalisierungsvertiefung (32) sichtbar ist, wobei Gleitbarkeit oder Drehbarkeit des Signalisierungsglieds (26) unabhängig von der Gleitbarkeit oder Drehbarkeit des Verriegelungsglieds (18) ist.

2. Klammer nach Anspruch 1, wobei das Signal ein visuelles Signal ist.

3. Klammer nach Anspruch 1 oder 2, wobei das Signal ein elektronisches Signal ist, das zu einer elektronischen Verarbeitungseinheit geleitet wird.

4. Klammer nach einem der vorhergehenden Ansprüche, wobei das Signal ein auditives Signal ist.

5. Klammer nach einem der Ansprüche 1-4, wobei die Signalisierungsmittel (22, 24, 26-32) Folgendes umfassen:
eine Vertiefung (24) in der Deckkappe (22), die so positioniert ist, dass dadurch eine Oberseite des Befestigungskopfs (110) sichtbar ist und zentriert ist, wenn das Befestigungselement (106) in dem schmalen Teil (16) der im Wesentlichen schlüsselförmigen Vertiefung (14, 16) in der richtigen Weise aufgenommen ist.

6. Klammer nach einem der vorhergehenden Ansprüche, wobei das Verriegelungsglied (18) drehbar ist um eine Scharnierachse (L), die parallel zu dem Körperteil (12) verläuft.

7. Klammer nach Anspruch 6, wobei das Verriegelungsglied (18) einen im Wesentliche plattenförmigen Körper (18) mit einer Kante (18a) umfasst, die im Wesentlichen parallel zu der Scharnierachse L verläuft, wobei die Kante (18a) in der geschlossenen Position des Verriegelungsglieds (18) eine Umfangskante des Befestigungskopfs (110) so begrenzt, dass das Befestigungselement (106) nicht von dem schmalen Teil (16) zu dem breiten Teil (14) der im Wesentlichen schlüssellochförmigen Vertiefung (14, 16) beweglich ist, wobei die relevante Kante (18a) beim Drehen des Verriegelungsglieds (18) in die Freigabeposition sich weg von dem Körperteil (12) in Bezug auf die geschlossene Position des Verriegelungsglieds (18) bewegt hat, sodass die relevante Kante (18a) die Umfangskante des Befestigungskopfs (110) nicht begrenzt und der Befestigungskopf (110) zwischen dem Verriegelungsglied (18) und dem Körperteil (12) in Richtung des breiten Teils (14) der im Wesentlichen schlüsselochförmigen Vertiefung (14, 16) beweglich ist.

8. Klammer nach Anspruch 7, wobei, um das Verriegelungsglied (18) von der geschlossenen Position zur Freigabeposition zu bringen, eine Druckkraft auf das Verriegelungsglied (18) ausgeübt werden muss, die im Wesentlichen senkrecht zu einer Hauptoberfläche des Körperteils (12) gerichtet ist.

9. Klammer nach Anspruch 7 oder 8, wobei die Kante (18a) des Verriegelungsglieds (18) versehen ist mit einer im Wesentlichen halbkreisförmigen Vertiefung, deren Durchmesser im Wesentlichen dem Außendurchmesser des Befestigungskopfs (110) entspricht, sodass die Umfangskante des Befestigungskopfs (110) teilweise von dem Kantenteil der Kante (18a), die die kreisförmige Vertiefung definiert, umgeben ist.

10. Klammer nach einem der Ansprüche 7-9, wobei die Kante (18a) eine Dicke hat, die in Bezug auf die Dicke des plattenförmigen Körpers (18) des Verriegelungsglieds (18) vergrößert ist, wobei die Dicke der Kante (18a) im Wesentlichen der Dicke des Befestigungskopfs (110) entspricht.

11. Klammer nach einem der vorhergehenden Ansprüche, versehen mit:
mindestens einer schlitzförmigen Vertiefung (34) in dem Körperteil (12) der Hülle zur Befestigung einer Schlinge (102) an der Klammer (10).

12. Klammer nach einem der Ansprüche 1-11, versehen mit einer Deckkappe (22), die den breiten Teil (14) der im Wesentlichen schlüssellochförmigen Öffnung (14, 16) mindestens teilweise bedeckt.

13. Anordnung, umfassend:
• ein Hebezeug (100), versehen mit einem Hebearm (104), wobei der Hebearm (104) versehen ist mit zwei pilzförmigen Befestigungselementen (106), umfassend einen Befestigungsstift (108) und einen integral damit verbundenen Befestigungskopf (110), wobei der Befestigungskopf (110) einen größeren Durchmesser als der Befestigungsstift (108) hat;
• mindestens eine Klammer (10) nach einem der vorhergehenden Ansprüche; und
• eine Schlinge (102), die mit mindestens einem freien Ende versehen ist, wobei jedes freie Ende mit einer zugehörigen Klammer (10) verbunden ist,

## Revendications

1. Attache (10), destinée à raccorder une élingue (102) à un bras de levage (104) d'un treuil (100), dans laquelle le bras de levage (104) est muni d'au moins un élément de fixation sensiblement en forme de champignon (106), qui comprend une goupille de fixation (108) et une tête de fixation (110) qui y est reliée d'un seul tenant, dans laquelle la tête de fixation (110) a un diamètre plus grand que la goupille de fixation (108), dans laquelle l'attache (10) est munie :
• d'un boîtier avec une partie formant corps (12), dans lequel est prévu un évidement sensiblement en forme de trou de serrure (14, 16), dans laquelle l'évidement sensiblement en forme de trou de serrure comprend une partie large (14) et une partie étroite (16), dans laquelle la partie large (14) a une dimension qui est telle que la tête de fixation (110) y est mobile au travers et dans laquelle la partie étroite (16) a une dimension qui est telle que la tête de fixation (110) n'y est pas mobile au travers et la goupille de fixation (108) est :
• un élément de verrouillage (18), qui est relié à pivotement ou à coulissement à la partie formant corps (12), dans laquelle l'élément de verrouillage (18) peut supposer une position fermée et une position de desserrage ;
• un ressort (20), destiné à incliner l'élément de verrouillage (18) dans la position fermée ;
**caractérisée par** :
∼ des moyens de signalisation (22, 24 ; 22, 26-32), qui sont agencés pour fournir un signal, à partir duquel il apparaît que l'élément de fixation (106) est positionné dans la partie étroite (16) de l'évidement sensiblement en forme de trou de serrure (14, 16) de manière appropriée, dans laquelle les moyens de signalisation (24 ; 26-32) comprennent :
∼ un capuchon de couverture (22), qui est relié à la partie formant corps (12) et qui couvre la partie étroite (16) de l'évidement sensiblement en forme de trou de serrure (14, 16) au moins partiellement sur un côté de la partie formant corps (12) ;
∼ un élément de signalisation (26), qui est relié à coulissement ou à pivotement à la partie formant corps (12), qui est couvert au moins partiellement par le capuchon de couverture (2), qui est muni d'au moins deux zones colorées différemment (28, 28') et qui peut coulisser ou pivoter depuis une première position vers une seconde position et vice versa ;
∼ un moyen formant ressort (30), qui pousse l'élément de signalisation (26) dans une première position ;
∼ au moins un évidement de signalisation (32) dans le capuchon de couverture (22) ou la partie formant corps (12), qui est associé aux zones colorées différemment (28, 28') ;
dans laquelle l'élément de signalisation (26) est dans la première position, lorsqu'aucun élément de fixation (106) n'est logé dans la partie étroite (16) de l'évidement sensiblement en forme de trou de serrure (14, 16) et dans laquelle l'élément de signalisation (26) est dans la seconde position, lorsque l'élément de fixation (106) est logé dans la partie étroite (16) de l'évidement sensiblement en forme de trou de serrure (14, 16) de manière appropriée, dans laquelle, dans la première position de l'élément de signalisation (26), une première zone (28) des deux zones colorées différemment (28, 28') est visible par l'intermédiaire du au moins un évidement de signalisation (32), dans laquelle, dans la seconde position de l'élément de signalisation (26), une seconde zone (28') des deux zones colorées différemment (28, 28') est visible par l'intermédiaire du au moins un évidement de signalisation (32), dans laquelle la capacité de coulissement ou la capacité de pivotement de l'élément de signalisation (26) est indépendante de la capacité de coulissement ou la capacité de pivotement de l'élément de verrouillage (18).

2. Attache selon la revendication 1, dans laquelle le signal est un signal visuel.

3. Attache selon la revendication 1 ou 2, dans laquelle le signal est un signal électronique qui est dirigé vers une unité de traitement électronique.

4. Attache selon l'une quelconque des revendications précédentes, dans laquelle le signal est un signal auditif.

5. Attache selon l'une quelconque des revendications 1 à 4, dans laquelle les moyens de signalisation (22, 24, 26 - 32) comprennent :
• un évidement (24) dans le capuchon de couverture (22), qui est positionné de telle sorte qu'un côté supérieur de la tête de fixation (110) y est visible au travers et est centré lorsque l'élément de fixation (106) est logé dans la partie étroite (16) de l'évidement sensiblement en forme de trou de serrure (14, 16) de manière appropriée.

6. Attache selon l'une quelconque des revendications précédentes, dans laquelle l'élément de verrouillage (18) peut pivoter autour d'un axe formant charnière (L), qui s'étend parallèlement à la partie formant corps (12).

7. Attache selon la revendication 6, dans laquelle l'élément de verrouillage (18) comprend un corps sensiblement en forme de plaque (18), avec un bord (18a) qui s'étend sensiblement parallèlement à l'axe formant charnière L, dans laquelle le bord (18a), dans la position fermée de l'élément de verrouillage (18), délimite un bord circonférentiel de la tête de fixation (110), de sorte que l'élément de fixation (106) n'est pas mobile depuis la partie étroite (16) vers la partie large (14) de l'évidement sensiblement en forme de trou de serrure (14, 16), dans laquelle le bord (18a) adéquat, lors du pivotement de l'élément de verrouillage (18) dans la position de desserrage, s'est écarté de la partie formant corps (12) par rapport à la position fermée de l'élément de verrouillage (18), de sorte que le bord (18a) adéquat ne délimite pas le bord circonférentiel de la tête de fixation (110) et la tête de fixation (110) est mobile entre l'élément de verrouillage (18) et la partie formant corps (12) dans la direction de la partie large (14) de l'évidement sensiblement en forme de trou de serrure (14, 16).

8. Attache selon la revendication 7, dans laquelle, pour amener l'élément de verrouillage (18) de la position fermée vers la position de desserrage, une force de pression doit être exercée sur l'élément de verrouillage (18), qui est dirigée sensiblement perpendiculairement à une surface principale de la partie formant corps (12).

9. Attache selon la revendication 7 ou 8, dans laquelle ledit bord (18a) de l'élément de verrouillage (18) est muni d'un évidement sensiblement semi-circulaire, dont le diamètre correspond sensiblement au diamètre extérieur de la tête de fixation (110), de sorte que le bord circonférentiel de la tête de fixation (110) est entouré partiellement par la partie formant bord du bord (18a) qui définit l'évidement circulaire.

10. Attache selon l'une quelconque des revendications 7 à 9, dans laquelle le bord (18a) a une épaisseur qui est élargie par rapport à l'épaisseur du corps en forme de plaque (18) de l'élément de verrouillage (18), dans laquelle l'épaisseur du bord (18a) correspond sensiblement à l'épaisseur de la tête de fixation (110).

11. Attache selon l'une quelconque des revendications précédentes, munie :
• d'au moins un évidement fendu (34) dans la partie formant corps (12) du boîtier pour la fixation d'une élingue (102) sur l'attache (10).

12. Attache selon l'une quelconque des revendications 1 à 11, munie d'un capuchon de couverture (22), qui couvre au moins partiellement la partie large (14) de l'ouverture sensiblement en forme de trou de serrure (14, 16).

13. Ensemble, comprenant :
• un treuil (100), muni d'un bras de levage (104), dans lequel le bras de levage (104) est muni d'au moins deux éléments de fixation en forme de champignon (106), comprenant une goupille de fixation (108) et une tête de fixation (110), qui y sont reliées d'un seul tenant, dans lequel la tête de fixation (110) a un diamètre supérieur à celui de la goupille de fixation (108) ;
• au moins une attache (10) selon l'une quelconque des revendications précédentes et
• une élingue (102), qui est munie d'au moins une extrémité libre, dans lequel chaque extrémité libre est reliée à une attache (10) associée.
